# EUROPÄISCHE PATENTSCHRIFT

(11) **EP 1 670 639 B1**
(45) Veröffentlichungstag und Bekanntmachung des Hinweises auf die Patenterteilung: **14.04.2010**
(21) Anmeldenummer: 04765080.9
(22) Anmeldetag: 10.09.2004
(51) Int. Cl.: B32B 27/04, B32B 5/18, B32B 27/32

(54) **MEHRSCHICHTIGES VERKLEIDUNGSTEIL FÜR EIN FAHRZEUG**
COMPOSITE CLADDING PIECE FOR A VEHICLE
ELEMENT D'HABILLAGE MULTICOUCHE POUR UN VEHICULE

(30) Priorität: 12.09.2003 DE 10342613
(43) Veröffentlichungstag der Anmeldung: 21.06.2006
(73) Patentinhaber: Röchling Automotive AG & Co. KG, 68165 Mannheim (DE)
(72) Erfinder: WIRTH, Reinhard, 76571 Gaggenau (DE); STARKE, Joachim, 81375 München (DE); KAMPKE, Manfred, 85117 Eitensheim (DE)
(74) Vertreter: Trossin, Hans-Jürgen
(86) Internationale Anmeldenummer: PCT/EP2004/010155
(87) Internationale Veröffentlichungsnummer: WO 2005/025858

(56) Entgegenhaltungen:
- EP-A- 0 657 281
- EP-A- 1 106 344
- DE-A- 19 544 451
- DATABASE WPI Section Ch, Week 199519 Derwent Publications Ltd., London, GB; Class A17, AN 1995-144310 XP002310230 & JP 07 068689 A (TOYOTA JIDOSHA KK) 14. März 1995 (1995-03-14)
- PATENT ABSTRACTS OF JAPAN Bd. 2002, Nr. 02, 2. April 2002 (2002-04-02) & JP 2001 301078 A (SEKISUI CHEM CO LTD), 30. Oktober 2001 (2001-10-30)

## Beschreibung

Die Erfindung betrifft ein mehrschichtiges Verkleidungsteil für ein Fahrzeug, insbesondere ein Kraftfahrzeug.

Bei einem derartigen Verkleidungsteil kann es sich um eine Fahrzeug-Innenverkleidung, z.B. eine Türverkleidung oder eine Hutablage, um ein Verkleidungsteil für die Motorhaube oder die Dachhaut, um einen Modulträger, z.B. für ein Türmodul, oder auch um die Verkleidung eines Fahrzeug-Unterbodens oder -Radhauses handeln, von dem im folgenden beispielhaft ausgegangen wird. Dabei wird das sogenannte Trägerteil beschrieben, das für die mechanischen Eigenschaften des Verkleidungsteils verantwortlich ist. Zusätzlich können weitere Schichten aus optischen, haptischen oder akustischen Gründen notwendig sein, auf die jedoch hier nicht weiter eingegangen werden soll.

Bei Kraftfahrzeugen ist es bekannt, den Unterboden und die Innenseite des Radkastens bzw. des Radhauses mit einer Verkleidung abzudecken, um zu verhindern, dass durch die Reifen hochgeschleuderte Steine, die mit relativ hoher Geschwindigkeit auf das Fahrzeug auftreffen, dieses im Unterbodenbereich beschädigen. Darüber hinaus soll die Verkleidung der Geräuschdämmung dienen und die Aerodynamik des Fahrzeugs verbessern.

Als Verkleidung finden beispielsweise mehrschichtige Kunststoff-Formteile Verwendung, die eine poröse Tragschicht insbesondere aus Polypropylen aufweisen, die mittels Fasern verstärkt ist. Um während des Betriebs des Fahrzeugs eine übermäßige Wasseraufnahme in der Tragschicht zu verhindern, die zu einem erhöhten Fahrzeuggewicht und somit einem erhöhten Kraftstoffverbrauch führt, ist es bekannt, die Tragschicht beidseitig mit Deckfolien aus Polypropylen zu kaschieren. Diese Deckfolien aus Polypropylen sind jedoch teuer und schlagempfindlich, so dass sie von aufgewirbelten Steinen durchschossen werden können, wodurch wiederum Wasser in die Tragschicht eindringen kann. Darüber hinaus besitzt das bekannte Formteil eine für sein Flächengewicht relativ geringe Biegesteifigkeit.

Der Erfindung liegt die Aufgabe zugrunde, ein mehrschichtiges Verkleidungsteil der genannten Art zu schaffen, das sich in kostengünstiger Weise herstellen lässt und das bei geringem Gewicht eine hohe Biegesteifigkeit aufweist sowie einen guten Schutz gegen äußere mechanische Belastungen bietet.

Diese Aufgabe wird erfindungsgemäß durch ein mehrschichtiges Verkleidungsteil mit den kennzeichnenden Merkmalen des Anspruchs 1 gelöst.

Dabei ist eine Kernschicht vorgesehen, die von einem Schaum eines thermoplastischen Polyolefins gebildet und beidseitig von jeweils einer Deckschicht überdeckt ist, wobei jede Deckschicht von einer mit langen Verstärkungsfasern, d.h. sogenannten Langfasern, verstärkten Folie mit einer thermoplastischen Polyolefin-Matrix gebildet ist, wobei der Anteil der Verstärkungsfasern in den Deckschichten im Bereich von 10 bis 50 Gew.% und insbesondere im Bereich von 20 bis 30 Gew.% liegt und die Verstärkungsfasern eine Länge von ≥ 12,5mm aufweisen. Bei den Verstärkungsfasern kann es sich um Glasfasern und/oder Naturfasern und/oder Polyesterfasern handeln. Die Abmessungen bzw. Dicken der Kernschicht und der Deckschichten sind so gewählt, dass das Verhältnis der Dicke S der Kernschicht zu der Dicke einer der Deckschichten im Bereich von 6,0 bis 15,0 liegt.

Die Kernschicht weist eine Dicke im bereich von 2 bis 5 mm auf, und jede Deckschicht ist von einem verdichteten Wirrfaser-Vlies mit einer Dicke im Bereich von 0.3 bis 0,7 mm gebildet.

Erfindungsgemäß wird von der Grundüberlegung ausgegangen, nicht die mittlere Kernschicht als eigentliche Tragschicht auszubilden, sondern einen sogenannten Sandwich-Aufbau vorzusehen, bei dem die Biegesteifigkeit im Wesentlichen durch die beiden äußeren Deckschichten bestimmt wird und die Kernschicht im wesentlichen die Funktion erfüllt, die Deckschichten in definierter Stellung auf einem relativ großen Abstand zu halten. Darüber hinaus dient die Kernschicht der Schubübertragung bei Belastung des Verkleidungsteils.

Die Kernschicht ist von einem vorzugsweise geschlossenzelligen Schaum aus einem thermoplastischen Polyolefin, beispielsweise aus Polypropylen oder einem Polyethylen-Polypropylen-Copolymer, gebildet.

Wenn der Schaum geschlossenzellig ausgebildet ist, ist der besondere Vorteil gegeben, dass sowohl die Deckschichten als auch die Kernschicht kein Wasser aufnehmen können, so dass auf eine spezielle Abdichtung verzichtet werden kann. Alternativ ist jedoch auch die Verwendung eines offenzelligen Schaums möglich.

Aufgrund der Verstärkung beider äußerer Deckschichten mit langen Verstärkungsfasern besitzt das Verkleidungsteil zusätzlich zu der verbesserten Biegesteifigkeit auch einen guten äußeren Schutz gegen mechanische Belastungen, z.B. Steinschlag, da die faserverstärkten Deckschichten relativ zäh sind und somit eine gute äußere Schutzschicht für das Verkleidungsteil bilden. Dabei ist vorgesehen, dass die Matrix, d.h. das Grundmaterial der Deckschichten, ebenfalls aus einem thermoplastischen Polyolefin, beispielsweise Polypropylen oder einem Polyethylen-Polypropylen-Copolymer besteht.

Bei dem erfindungsgemäßen Verkleidungsteil ist die Dicke der Kernschicht wesentlich größer als die Dicke jeder einzelnen Deckschicht, wobei das Verhältnis der Dicke S der Kernschicht zu der Dicke D₁ bzw. D₂ einer der Deckschichten im Bereich von 6,0 bis 15,0 liegt. Mit einem derartigen Aufbau ist gewährleistet, dass das Verkleidungsteil bei geringem Gewicht eine hohe Biegesteifigkeit besitzt.

In bevorzugter Ausgestaltung der Erfindung ist vorgesehen, dass die Deckschichten von einem Wirrfaservlies gebildet sind, das die Verstärkungsfasern sowie die Fasern der Polyolefin-Matrix aufweist oder vollständig aus diesen beiden Komponenten besteht und anschließend unter Zuführung von Wärmeenergie verdichtet wird. In besonders bevorzugter Ausgestaltung der Erfindung kann vorgesehen sein, dass die Verstärkungsfasern im Wesentlichen nur in der Schichtebene, d.h. der Ebene der Deckschicht, in Wirrlage angeordnet sind. Die Wirrlage der Verstärkungsfasern in der Schichtebene gewährleistet eine hohe Zugfestigkeit der Deckschichten und eine hohe Biegesteifigkeit des Verkleidungsteils.

Der Anteil der Verstärkungsfasern in den Deckschichten liegt im Bereich von 10 bis 50 Gew.% und sollte insbesondere im Bereich von 20 bis 30 Gew.% liegen. Als Verstärkungsfasern werden sogenannte Langfasern mit einer Länge von zumindest 12,5mm verwendet.

In einer möglichen Ausgestaltung der Erfindung ist vorgesehen, dass beide Deckschichten den gleichen Aufbau aufweisen und aus dem gleichen Material bestehen. Es ist jedoch auch möglich, dass die im eingebauten Zustand der Lastangriffsseite, z.B. der Straße zugewandte Deckschicht des Verkleidungsteils einen höheren Gehalt an Verstärkungsfasern und/ oder eine größere Dicke als die andere Deckschicht aufweist, da sie in der Regel einem höheren Verschleiß bei Gebrauch des Fahrzeugs unterliegt.

Aufgrund der Verstärkung mittels der Verstärkungsfasern können die Deckschichten relativ dünn und kompakt ausgebildet werden, wobei es sich gezeigt hat, dass das Verkleidungsteil eine ausreichende Stabilität besitzt, wenn jede Deckschicht eine Dicke im Bereich von 0,3mm bis 0,7mm aufweist. Das Flächengewicht jeder Deckschicht sollte ≤ 600g/m² und insbesondere ≤ 500g/m² sein. Besonders vorteilhaft weist zumindest eine der Deckschichten ein Flächengewicht ≤ 400g/m² auf.

Vorzugsweise besitzt der Polyolefin-Schaum der Kernschicht eine Dickenelastizität bzw. eine Nachgiebigkeit in Dickenrichtung, was eine verbesserte Verschleißfestigkeit des Verkleidungsteils bei Steinschlag mit sich bringt. Darüber hinaus wirken sich die unterschiedlichen Elastizitätsmoduln der Deckschichten einerseits und des Schaums andererseits vorteilhaft hinsichtlich der Schalldämmung aus.

In bevorzugter Ausgestaltung der Erfindung ist vorgesehen, dass der Schaum der Kernschicht vor der Komprimierung zu dem Verkleidungsteil ein Volumengewicht ≤ 120kg/m³ und insbesondere im Bereich von 20 bis 50 kg/m³ aufweist.

Der Schaum der Kernschicht sollte ein Flächengewicht von ≤ 500 g/m² und insbesondere ≤ 350 g/m² aufweisen. Insbesondere ist vorgesehen, dass die Summe der Flächengewichte beider Deckschichten größer als das Flächengewicht des Schaums der Kernschicht ist. Dabei hat es sich als vorteilhaft erwiesen, wenn das Verhältnis f der Summe der Flächengewichte beider Deckschichten zu dem Flächengewicht der Kernschicht im Bereich von 1,01 bis 5,0 liegt. Dabei kann das Verhältnis f im Bereich von 1,5 bis 4,0 und insbesondere im Bereich von 1,5 bis 3,0 liegen. Des Weiteren liegt die Dicke der Kernschicht im Bereich von 2mm bis 5mm liegen.

Infolge der Erwärmung zur Herstellung des Verkleidungsteils mittels Umformen kann es passieren, dass die in den Deckschichten enthaltenen langen Verstärkungsfasern, insbesondere die Glasfasern, zum Aufbauschen (Loften) neigen. Dies hat zur Folge, dass die Glasfasern an der Oberfläche spürbar sind, was zu einer unebenen Oberfläche führt. Gegebenenfalls können die Glasfasern auch aus der Deckschicht hervorstehen, wodurch eine Verletzungsgefahr gegeben ist. Erfindungsgemäß wird dies vorzugsweise durch die Aufbringung von außenseitigen Abdeckschichten vermieden, wobei die Abdeckschichten sehr dünn und sehr leicht sind. Die Abdeckschichten stellen sicher, dass die Glasfasern an der Oberfläche nicht spürbar sind und insbesondere nicht aus dieser hervorstehen.

Die äußeren Abdeckschichten können bei dem erfindungsgemäßen Verkleidungsteil von einem dünnen Abdeckvlies oder einer dünnen Abdeckfolie beispielsweise aus einem thermoplastischen Polyester gebildet sein. Die Verbindung zwischen der Abdeckschicht und der darunterliegenden Deckschicht kann durch Verkleben erfolgen, insbesondere ist jedoch vorgesehen, dass jede Abdeckschicht mit der zugeordneten Deckschicht oberflächlich verschmolzen und in diese eingebettet ist. Dabei können die Materialien der Deckschicht und der Kernschicht so gewählt sein, dass beide oberflächlich aufschmelzen und sich miteinander verbinden, vorzugsweise ist jedoch vorgesehen, dass nur die Matrix der Deckschichten schmilzt und in die jeweils zugeordnete Abdeckschicht eindringt und sich mit dieser verbindet. Es hat sich als vorteilhaft erwiesen, wenn das Flächengewicht jeder Abdeckschicht ≤ 40g/m² und insbesondere ≤ 20g/m² ist.

Die Dicke jeder äußeren Abdeckschicht ist sehr gering und sollte kleiner als 0,1mm sein.

Die Gesamtdicke des Verkleidungsteils, d.h. die Dicke der Kernschicht und der beiden Deckschichten, sollte im Bereich von 3,0mm bis 6,0mm liegen, damit in einem Fahrzeug kein übermäßiger Bauraum beansprucht wird.

Vorzugsweise besitzt das Formteil ein Gesamtflächengewicht ≤ 1500g/m². In einer besonders bevorzugten Ausgestaltung der Erfindung ist dabei vorgesehen, dass das Gesamtflächengewicht des Verkleidungsteils < 1400g/m² und insbesondere ≤1100g/m² ist.

Zur Herstellung des Verkleidungsteils werden zwei Deckschichtlagen, beispielsweise zwei Faservliese genannten Aufbaus, auf gegenüberliegenden Seiten einer Kernschicht bzw. Schaumlage genannten Aufbaus angeordnet und von der Außenseite erwärmt. Da die Deckschichten gegen Wärmeeinwirkung relativ unempfindlich sind, können sie schnell und durch Einwirkung hoher Temperaturen durchgeheizt werden. Die Kernschicht nimmt dabei nur relativ wenig Wärme auf, da sie durch die Deckschichten abgeschirmt ist. Die äußeren dünnen Abdeckschichten, die insbesondere aus einem Material bestehen, dessen Schmelztemperatur deutlich, d.h. um zumindest 10° über der Schmelztemperatur des Materials der Deckschichten liegt, werden auf der Außenseite der Deckschichten angeordnet und in die aufgeschmolzene Matrix der Deckschichten hineingedrückt, wodurch jede Abdeckschicht mit der zugeordneten Deckschicht oberflächlich verschmolzen und in diese eingebettet wird.

Wenn der Schichtaufbau die gewünschte Temperatur, d.h. die sogenannte Umform- oder Schmelztemperatur, erreicht hat, wird der Schichtaufbau in einem Werkzeug verpresst und gleichzeitig in die gewünschte räumliche Form gebracht. Dabei geht die an- oder aufgeschmolzene Matrix der Deckschichten eine Verbindung mit der Kernschicht ein. Die Kernschicht wird bei dem Verpressen von ihrer Ausgangsdicke von beispielsweise 5mm auf ca. 3mm komprimiert, wodurch auch der notwendige Gegendruck gewährleistet ist, um eine gut abgeformte Formteiloberfläche sicherzustellen. Die Materialien der Deckschichten und der Kernschicht sind vorzugsweise so aufeinander abgestimmt, dass die Schmelztemperatur des thermoplastischen Schaums der Kernschicht gleich oder höher ist als die Schmelztemperatur des thermoplastischen Kunststoffs der Matrix der Deckschicht. Es ist jedoch auch möglich, dass der thermoplastische Schaum der Kernschicht eine geringere Schmelztemperatur als der thermoplastische Kunststoff der Matrix der Deckschicht besitzt. Wenn sowohl für die Kernschicht einerseits als auch die Deckschichten andererseits Polypropylen verwendet wird, finden vorzugsweise unterschiedliche Polypropylen-Materialien Verwendung.

Weitere Einzelheiten und Merkmale der Erfindung sind aus der folgenden Beschreibung eines Ausführungsbeispiels unter Bezugnahme auf die Zeichnung ersichtlich. Es zeigen:
- Figur 1: einen ausschnittsweisen Querschnitt durch ein mehrschichtiges Formteil gemäß der Erfindung und
- Figur 2: eine Weiterbildung der Ausgestaltung gemäß Fig. 1.

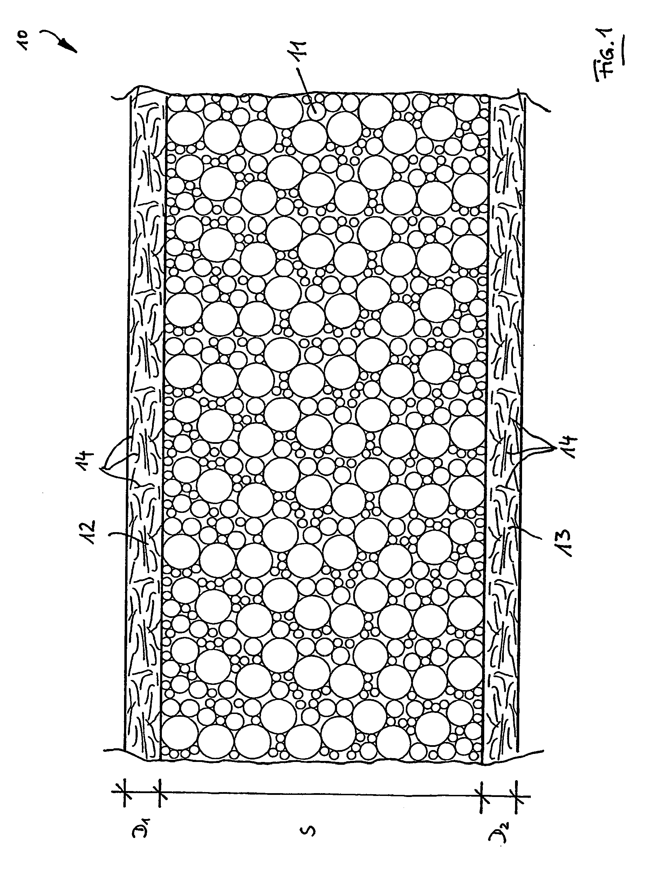

In Figur 1 ist der Querschnitt eines mehrschichtigen Formteils 10 dargestellt, das als Verkleidung eines Kraftfahrzeug-Unterbodens oder -Radhauses Verwendung findet. Das Formteil 10 besteht aus einer inneren Kernschicht 11, die von einem geschlossenzelligen Schaum eines Polyolefins gebildet ist. Auf der Ober- und Unterseite der Kernschicht 11 ist jeweils eine Deckschicht 12 bzw. 13 angeordnet, die aus einer Matrix aus einem thermoplastischen Polyolefin wie Polypropylen besteht und in der Langfasern 14 in Form von Glasfasern mit einem Anteil von vorzugsweise 20 bis 30 Gew.% eingebettet sind. Wie Figur 1 zeigt, ist die mittlere Kernschicht 11 wesentlich dicker als die Deckschichten 12 und 13, so dass das Formteil 10 aufgrund der weit auseinanderliegenden tragenden Deckschichten 12 und 13 eine hohe Biegesteifigkeit besitzt. Im dargestellten Ausführungsbeispiel ist die Dicke S der Kernschicht 11 etwa 9-mal größer als die Dicke D₁ bzw. D₂ jeder Deckschicht 12 bzw. 13.

Der Schichtaufbau wird unter Wärmeeinwirkung und Verpressen des entsprechenden mehrschichtigen Aufbaus zu dem Endprodukt umgeformt, wobei das aufgeschmolzene KunststoffMaterial der Matrix der Deckschichten 12 und 13 auf ihrer inneren, der Kernschicht 11 zugewandten Seite mit dem Material der Kernschicht 11 verbunden ist.

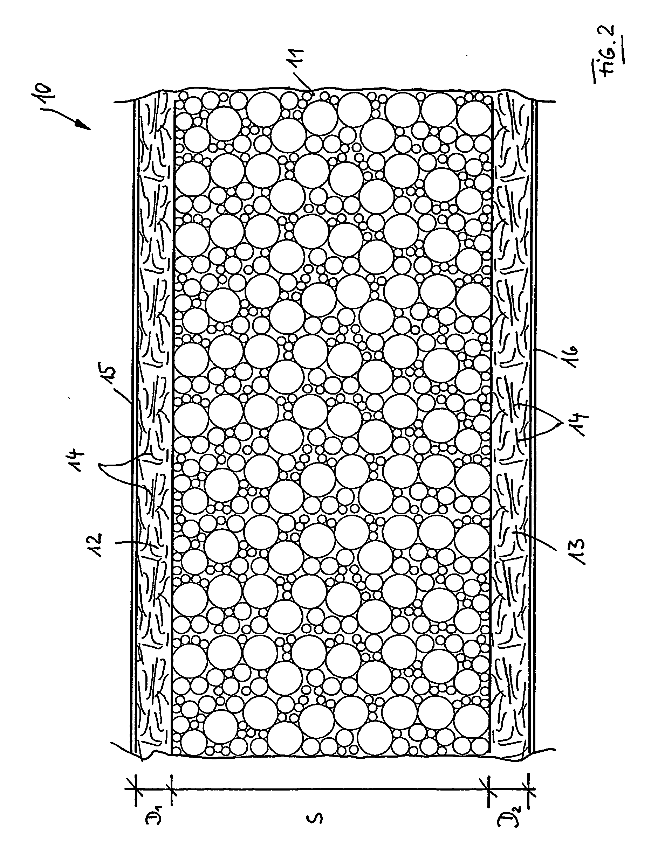

Der in Figur 2 gezeigte Querschnitt eines mehrschichtigen Formteils 10 stellt eine Weiterbildung des Formteils gemäß Fig. 1. dar und unterscheidet sich von diesem lediglich dadurch, dass auf der Außenseite jeder Deckschicht 12, 13 eine dünne Abdeckschicht 15, 16 insbesondere aus Polyester angeordnet ist, die die zugeordnete Deckschicht 12, 13 vollständig überdeckt und mit dieser oberflächlich verschmolzen und in diese eingebettet ist. Jede Abdeckschicht 15, 16 weist ein sehr geringes Flächengewicht von ≤ 20g/m² auf.

Auch in diesem Fall wird der Schichtaufbau unter Wärmeeinwirkung und Verpressen zu dem Endprodukt umgeformt, wobei zusätzlich aufgrund der Anordnung der äußeren Abdeckschichten 15, 16 auf der Außenseite eine verfestigte, kontinuierliche, glatte Oberfläche gebildet ist.

## Patentansprüche

1. Mehrschichtiges Verkleidungsteil für ein Fahrzeug, insbesondere Kraftfahrzeug, mit einer Kernschicht (11), die von einem Schaum eines Polyolefins gebildet und beidseitig von jeweils einer Deckschicht (12, 13) überdeckt ist,
wobei jede Deckschicht (12, 13) von einer mit langen Verstärkungsfasern (14) verstärkten Folie mit einer Polyolefin-Matrix gebildet ist und der Anteil der Verstärkungsfasern (14) in den Deckschichten (12, 13) im Bereich von 10 bis 50 Gew.% und insbesondere im Bereich von 20 bis 30 Gew.% liegt und die Verstärkungsfasern eine Länge von ≥ 12,5mm aufweisen,
wobei die Kernschicht (11) eine Dicke im Bereich von 2mm bis 5mm aufweist und jede Deckschicht (12, 13) von einem verdichteten Wirrfaser-Vlies mit einer Dicke im Bereich von 0,3mm bis 0,7 gebildet ist und
wobei das Verhältnis der Dicke (S) der Kernschicht (11) zu der Dicke (D₁, D₂) einer der Deckschichten (12, 13) im Bereich von 6,0 bis 15,0 liegt.

2. Verkleidungsteil nach Anspruch 1, **dadurch gekennzeichnet, dass** die Verstärkungsfasern (14) Glasfasern und/ oder Naturfasern und/oder Polyesterfasern sind.

3. Verkleidungsteil nach Anspruch 1, **dadurch gekennzeichnet, dass** die Verstärkungsfasern im Wesentlichen in der Schichtebene wirr angeordnet sind.

4. Verkleidungsteil nach einem der Ansprüche 1 bis 3, **dadurch gekennzeichnet, dass** die Polyolefin-Matrix der Deckschichten (12, 13) von Polypropylen oder einem Polyethylen-Polypropylen-Copolymer gebildet ist.

5. Verkleidungsteil nach einem der Ansprüche 1 bis 4, **dadurch gekennzeichnet, dass** beide Deckschichten (12, 13) den gleichen Aufbau aufweisen.

6. Verkleidungsteil nach einem der Ansprüche 1 bis 4, **dadurch gekennzeichnet, dass** beide Deckschichten (12, 13) einen unterschiedlichen Aufbau aufweisen.

7. Verkleidungsteil nach Anspruch 6, **dadurch gekennzeichnet, dass** eine der Deckschichten einen höheren Gehalt an Verstärkungsfasern und/oder eine größere Dicke als die andere Deckschicht aufweist.

8. Verkleidungsteil nach einem der Ansprüche 1 bis 7, **dadurch gekennzeichnet, dass** jede Deckschicht (12, 13) ein Flächengewicht ≤ 600g/m² und insbesondere ≤ 500g/m³ aufweist.

9. Verkleidungsteil nach Anspruch 8, **dadurch gekennzeichnet, dass** zumindest eine der Deckschichten (12, 13) ein Flächengewicht ≤ 400g/m² aufweist.

10. Verkleidungsteil nach einem der Ansprüche 1 bis 9, **dadurch gekennzeichnet, dass** der Polyolefin-Schaum der Kernschicht (11) von Polypropylen oder einem Polyethylen-Polypropylen-Copolymer gebildet ist.

11. Verkleidungsteil nach einem der Ansprüche 1 bis 10, **dadurch gekennzeichnet, dass** der Schaum der Kernschicht (11) geschlossenzellig ist.

12. Verkleidungsteil nach einem der Ansprüche 1 bis 11, **dadurch gekennzeichnet, dass** der Schaum der Kernschicht (11) ein Flächengewicht von ≤ 500 g/m² und insbesondere ≤ 350 g/m² aufweist.

13. Verkleidungsteil nach einem der Ansprüche 1 bis 12, **dadurch gekennzeichnet, dass** die Summe der Flächengewichte beider Deckschichten (12, 13) größer als das Flächengewicht der Kernschicht (11) ist.

14. Verkleidungsteil nach Anspruch 13, **dadurch gekennzeichnet, dass** das Verhältnis f der Summe der Flächengewichte beider Deckschichten (12, 13) zu dem Flächengewicht der Kernschicht (11) im Bereich von 1,01 bis 5,0 liegt.

15. Verkleidungsteil nach Anspruch 14, **dadurch gekennzeichnet, dass** das Verhältnis f im Bereich von 1,5 bis 4,0 liegt.

16. Verkleidungsteil nach Anspruch 15, **dadurch gekennzeichnet, dass** das Verhältnis f im Bereich von 1,5 bis 3,0 liegt.

17. Verkleidungsteil nach einem der Ansprüche 1 bis 16, **dadurch gekennzeichnet, dass** jede Deckschicht (12, 13) außenseitig von einer dünnen Abdeckschicht (15, 16) überdeckt ist.

18. Verkleidungsteil nach Anspruch 17, **dadurch gekennzeichnet, dass** die äußeren Abdeckschichten (15, 16) von einem Abdeckvlies gebildet sind.

19. Verkleidungsteil nach Anspruch 17, **dadurch gekennzeichnet, dass** die äußeren Abdeckschichten (15, 16) von einer Abdeckfolie gebildet sind.

20. Verkleidungsteil nach einem der Ansprüche 17 bis 19, **dadurch gekennzeichnet, dass** die äußeren Abdeckschichten (15, 16) aus einem thermoplastischen Kunststoff, insbesondere einem thermoplastischen Polyester, bestehen.

21. Verkleidungsteil nach einem der Ansprüche 17 bis 20, **dadurch gekennzeichnet, dass** jede Abdeckschicht (15, 16) mit der zugeordneten Deckschicht (12, 13) oberflächlich verschmolzen und in diese eingebettet ist.

22. Verkleidungsteil nach einem der Ansprüche 17 bis 20, **dadurch gekennzeichnet, dass** jede Abdeckschicht (15, 16) mit der zugeordneten Deckschicht (12, 13) verklebt ist.

23. Verkleidungsteil nach einem der Ansprüche 17 bis 22, **dadurch gekennzeichnet, dass** die äußeren Abdeckschichten (15, 16) jeweils eine Dicke von < 0,1mm aufweisen.

24. Verkleidungsteil nach einem der Ansprüche 17 bis 23, **dadurch gekennzeichnet, dass** das Flächengewicht jeder Abdeckschicht (15, 16) ≤ 40 g/m² und insbesondere ≤ 20 g/m² ist.

25. Verkleidungsteil nach einem der Ansprüche 17 bis 24, **dadurch gekennzeichnet, dass** das Verkleidungsteil eine Gesamtdicke von 3,mm bis 6,0mm aufweist.

26. Verkleidungsteil nach einem der Ansprüche 1 bis 25, **dadurch gekennzeichnet, dass** das Gesamtflächengewicht des Verkleidungsteils (10) ≤ 1500g/m² ist.

27. Verkleidungsteil nach Anspruch 26, **dadurch gekennzeichnet, dass** das Gesamtflächengewicht des Verkleidungsteils (10) ≤ 1400g/m² und insbesondere ≤ 1100g/m² ist.

## Claims

1. Composite cladding piece for a vehicle, in particular a motor vehicle, with a core layer (11) which is formed by a polyolefin foam and is covered on both sides respectively by a cover layer (12, 13),
wherein each cover layer (12, 13) is formed by a film with a polyolefin matrix reinforced by long reinforcement fibres (14), and the proportion of reinforcement fibres (14) in the cover layers (12, 13) is in a range of from 10 to 50 wt. % and in particular in the range of 20 to 30 wt. % and the reinforcement fibres have a length of ≥ 12.5 mm,
wherein the core layer (11) has a thickness in the range of 2 mm to 5 mm and each cover layer (12, 13) is formed by a compacted random-fibre fleece with a thickness in a range of 0.3 mm to 0.7 mm and
wherein the ratio of the thickness (S) of the core layer (11) to the thickness (D₁, D₂) of one of the cover layers (12, 13) is in the range of 6.0 to 15.0.

2. Cladding piece according to claim 1, **characterised in that** the reinforcement fibres (14) are glass fibres and/or natural fibres and/or polyester fibres.

3. Cladding piece according to claim 1, **characterised in that** the reinforcement fibres are arranged substantially randomly in the layer plane.

4. Cladding piece according to one of claims 1 to 3, **characterised in that** the polyolefin matrix of the cover layers (12, 13) is formed by polypropylene or a polyethylene-polypropylene copolymer.

5. Cladding piece according to one of claims 1 to 4, **characterised in that** both cover layers (12, 13) have the same structure.

6. Cladding piece according to one of claims 1 to 4, **characterised in that** both cover layers (12, 13) have a different structure.

7. Cladding piece according to claim 6, **characterised in that** one of the cover layers has a greater content of reinforcement fibres and/or a greater thickness than the other cover layer.

8. Cladding piece according to one of claims 1 to 7, **characterised in that** each cover layer (12, 13) has a mass per unit area of 600 g/m² and in particular ≤ 500 g/m².

9. Cladding piece according to claim 8, **characterised in that** at least one of the cover layers (12, 13) has a mass per unit area of ≤ 400 g/m².

10. Cladding piece according to one of claims 1 to 9, **characterised in that** the polyolefin foam of the core layer (11) is formed by polypropylene or a polyethylene-polypropylene copolymer.

11. Cladding piece according to one of claims 1 to 10, **characterised in that** the foam of the core layer (11) is closed-cell foam.

12. Cladding piece according to one of claims 1 to 11, **characterised in that** the foam of the core layer (11) has a mass per unit area of ≤ 500 g/m² and in particular ≤ 350 g/m².

13. Cladding piece according to one of claims 1 to 12, **characterised in that** the sum of the masses per unit area of both cover layers (12, 13) is greater than the mass per unit area of the core layer (11).

14. Cladding piece according to claim 13, **characterised in that** the ratio f of the sum of the masses per unit area of both cover layers (12, 13) to the mass per unit area of the core layer (11) is in the range of 1.01 to 5.0.

15. Cladding piece according to claim 14, **characterised in that** the ratio f is in the range of 1.5 to 4.0.

16. Cladding piece according to claim 15, **characterised in that** the ratio f is in the range of 1.5 to 3.0.

17. Cladding piece according to one of claims 1 to 16, **characterised in that** each cover layer (12, 13) is covered on the outside by a thin cover layer (15, 16).

18. Cladding piece according to claim 17, **characterised in that** the outer cover layers (15, 16) are formed by a cover fleece.

19. Cladding piece according to claim 17, **characterised in that** the outer cover layers (15, 16) are formed by a cover film.

20. Cladding piece according to one of claims 17 to 19, **characterised in that** the outer cover layers (15, 16) are made from a thermoplastic plastic, in particular a thermoplastic polyester.

21. Cladding piece according to one of claims 17 to 20, **characterised in that** each cover layer (15, 16) is melted on the surface with the assigned cover layer (12, 13) and embedded therein

22. Cladding piece according to one of claims 17 to 20, **characterised in that** each cover layer (15, 16) is adhered to the assigned cover layer (12, 13).

23. Cladding piece according to one of claims 17 to 22, **characterised in that** the outer cover layers (15, 16) each have a thickness of < 0.1 mm.

24. Cladding piece according to one of claims 17 to 23, **characterised in that** the mass per unit area of each cover layer (15, 16) is s 40 g/m² and in particular ≤ 20 g/m².

25. Cladding piece according to one of claims 17 to 24, **characterised in that** the cladding piece has a total thickness of 3.0 mm to 6.0 mm.

26. Cladding piece according to one of claims 1 to 25, **characterised in that** the total mass per unit area of the cladding piece (10) is ≤ 1,500 g/m².

27. Cladding piece according to claim 26, **characterised in that** the total mass per unit area of the cladding piece (10) is s 1,400 g/m² and in particular ≤ 1,100 g/m².

## Revendications

1. Pièce d'habillage à plusieurs couches destinée à un véhicule, en particulier un véhicule automobile, avec une couche d'âme (11) formée par une mousse d'une polyoléfine, recouverte de part et d'autre par une couche de couverture (12, 13),
où chaque couche de couverture (12, 13) est formée par un film renforcé par des fibres de renforcement longues (14) avec une matrice polyoléfine, la part des fibres de renforcement (14) dans les couches de couverture (12, 13) étant comprise entre 10 et 50 % en poids et en particulier entre 20 et 30 % en poids, et les fibres de renforcement présentant une longueur supérieure ou égale à 12,5 mm,
où la couche d'âme (11) présente une épaisseur comprise entre 2 mm et 5 mm, chaque couche de couverture (12, 13) étant formée par un voile intissé à fibres emmêlées compacté ayant une épaisseur comprise entre 0,3 mm et 0,7 mm, et le rapport entre l'épaisseur (S) de la couche d'âme (11) et l'épaisseur (D₁, D₂) d'une des couches de couverture (12, 13) étant compris entre 6,0 et 15,0.

2. Pièce d'habillage selon la revendication 1, **caractérisée en ce que** les fibres de renforcement (14) sont des fibres de verre et/ou des fibres naturelles et/ou des fibres polyester.

3. Pièce d'habillage selon la revendication 1, **caractérisée en ce que** les fibres de renforcement sont essentiellement emmêlées sur le plan de couche.

4. Pièce d'habillage selon l'une des revendications 1 à 3, **caractérisée en ce que** la matrice polyoléfine des couches de couverture (12, 13) est formée par du polypropylène ou par un copolymère polyéthylène-polypropylène.

5. Pièce d'habillage selon l'une des revendications 1 à 4, **caractérisée en ce que** les deux couches de couverture (12, 13) présentent la même structure.

6. Pièce d'habillage selon l'une des revendications 1 à 4, **caractérisée en ce que** les deux couches de couverture (12, 13) présentent des structures différentes.

7. Pièce d'habillage selon la revendication 6, **caractérisée en ce qu'**une des couches de couverture présente une teneur en fibres de renforcement et/ou une épaisseur supérieure(s) à l'autre couche de couverture.

8. Pièce d'habillage selon l'une des revendications 1 à 7, **caractérisée en ce que** chaque couche de couverture (12, 13) présente un poids surfacique inférieur ou égal à 600 g/m², en particulier inférieur ou égal à 500 g/m².

9. Pièce d'habillage selon la revendication 8, **caractérisée en ce qu'**au moins une des couches de couverture (12, 13) présente un poids surfacique inférieur ou égal à 400 g/m².

10. Pièce d'habillage selon l'une des revendications 1 à 9, **caractérisée en ce que** la mousse polyoléfine de la couche d'âme (11) est formée par du polypropylène ou par un copolymère polyéthylène-polypropylène.

11. Pièce d'habillage selon l'une des revendications 1 à 10, **caractérisée en ce que** la mousse de la couche d'âme (11) est à cellules fermées.

12. Pièce d'habillage selon l'une des revendications 1 à 11, **caractérisée en ce que** la mousse de la couche d'âme (11) présente un poids surfacique inférieur ou égal à 500 g/m², en particulier inférieur ou égal à 350 g/m².

13. Pièce d'habillage selon l'une des revendications 1 à 12, **caractérisée en ce que** la somme des poids surfaciques des deux couches de couverture (12, 13) est supérieure au poids surfacique de la couche d'âme (11).

14. Pièce d'habillage selon la revendication 13, **caractérisée en ce que** le rapport f entre la somme des poids surfaciques des deux couches de couverture (12, 13) et le poids surfacique de la couche d'âme (11) est compris entre 1,01 à 5,0.

15. Pièce d'habillage selon la revendication 14, **caractérisée en ce que** le rapport f est compris entre 1,5 et 4,0.

16. Pièce d'habillage selon la revendication 15, **caractérisée en ce que** le rapport f est compris entre 1,5 et 3,0.

17. Pièce d'habillage selon l'une des revendications 1 à 16, **caractérisée en ce que** chaque couche de couverture (12, 13) est extérieurement recouverte par une couche de recouvrement mince (15, 16).

18. Pièce d'habillage selon la revendication 17, **caractérisée en ce que** les couches de recouvrement extérieures (15, 16) sont formées par un voile intissé de recouvrement.

19. Pièce d'habillage selon la revendication 17, **caractérisée en ce que** les couches de recouvrement extérieures (15, 16) sont formées par un film de recouvrement.

20. Pièce d'habillage selon l'une des revendications 17 à 19, **caractérisée en ce que** les couches de recouvrement extérieures (15, 16) consistent en une matière synthétique thermoplastique, en particulier un polyester thermoplastique.

21. Pièce d'habillage selon l'une des revendications 17 à 20, **caractérisée en ce que** chaque couche de recouvrement (15, 16) est soudée superficiellement à la couche de couverture correspondante (12, 13) et incorporée à celle-ci.

22. Pièce d'habillage selon l'une des revendications 17 à 20, **caractérisée en ce que** chaque couche de recouvrement (15, 16) est collée à la couche de couverture correspondante (12, 13).

23. Pièce d'habillage selon l'une des revendications 17 à 22, **caractérisée en ce que** les couches de recouvrement extérieures (15, 16) présentent chacune une épaisseur inférieure à 0,1 mm.

24. Pièce d'habillage selon l'une des revendications 17 à 23, **caractérisée en ce que** le poids surfacique de chaque couche de recouvrement (15, 16) est inférieur ou égal à 40 g/m², en particulier inférieur ou égal à 20 g/m².

25. Pièce d'habillage selon l'une des revendications 17 à 24, **caractérisée en ce que** ladite pièce d'habillage présente une épaisseur totale comprise entre 3,0 mm et 6,0 mm.

26. Pièce d'habillage selon l'une des revendications 1 à 25, **caractérisée en ce que** le poids surfacique total de ladite pièce d'habillage (10) est inférieur ou égal à 1 500 g/m².

27. Pièce d'habillage selon la revendication 26, **caractérisée en ce que** le poids surfacique total de ladite pièce d'habillage (10) est inférieur ou égal à 1 400 g/m², en particulier inférieur ou égal à 1 100 g/m².
